## Europäisches Patentamt

(19) **European Patent Office**

**Office européen des brevets**

(11) Veröffentlichungsnummer: **0 144 722**
**B1**

(12) **EUROPÄISCHE PATENTSCHRIFT**

(45) Veröffentlichungstag der Patentschrift:
20.05.87

(51) Int. Cl.⁴: **B 25 J 15/00**, B 23 Q 7/04

(21) Anmeldenummer: **84113126.1**

(22) Anmeldetag: **31.10.84**

(54) **Greifvorrichtung.**

(30) Priorität: **03.12.83 DE 3343765**

(43) Veröffentlichungstag der Anmeldung:
**19.06.85 Patentblatt 85/25**

(45) Bekanntmachung des Hinweises auf die Patenterteilung:
**20.05.87 Patentblatt 87/21**

(84) Benannte Vertragsstaaten:
**CH FR GB IT LI SE**

(56) Entgegenhaltungen:
**CH-A-642 324**
**DE-A-2 742 225**
**FR-A-1 397 958**

(73) Patentinhaber: **Deutsche Industrieanlagen Gesellschaft mbH, Fritz- Werner- Strasse, D-1000 Berlin 48 (DE)**

(72) Erfinder: **Rösler, Hermann, Ing. grad., Pommernweg 24, D-7141 Oberstenfeld (DE)**

(74) Vertreter: **Kratzsch, Volkhard, Dipl.- Ing., Mülbergerstrasse 65, D-7300 Esslingen (DE)**

LIBER, STOCKHOLM 1987

**Beschreibung**

Die Erfindung bezieht sich auf eine Greifvorrichtung der im Oberbegriff des Anspruchs 1 definierten Art. Greifvorrichtungen dieser Gattung sind bei Manipulatoren, insbesondere Industrierobotern, aber auch auf anderen technischen Gebieten und auch z.B. bei Werkzeugwechseleinrichtungen von numerisch gesteuerten Bearbeitungseinheiten, insbesondere Horizontal-Bearbeitungszentren, bekannt.

Es sind Greifvorrichtungen eingangs genannter Art für Werkzeugwechseleinrichtungen bekannt, bei denen an beiden Enden in einem Gehäuse zwei Greiferfinger angeordnet sind. Diese sind in der Lage, in der aus dem Gehäuse herausgeschobenen Greifstellung den zu greifenden Gegenstand, z.B. ein Werkzeug, zwischen ihren maulartig offenen Greifenden aufzunehmen und zu halten. Ferner sind die Greiferfinger so im Gehäuse gehalten und geführt, daß sie nur in der Greifstellung mit ihren Greifenden aus dem Gehäuse heraus vorstehen, dagegen in ihrer unwirksamen, den zu greifenden Gegenstand freigebenden Stellung zumindest im wesentlichen gänzlich und ohne Überstand innerhalb des Gehäuses aufgenommen sind. Die beiden Greiferfinger sind entlang von Führungsbahnen des Gehäuses translatorisch hin- und herbeweglich. Sie werden dazu mittels einer im Gehäuse geführten Zahnstange durch Drehantrieb eines mit der Zahnstange kämmenden Ritzels eingefahren bzw. herausgeschoben. Beide Greiferfinger sind gelenkig gekoppelt und federbelastet. Der eine Greiferfinger kann über eine Schrägfläche am Ende der Gehäuseöffnung in die maulartig offene Position aufklappen. Die Führungsbahnen, längs denen die Greiferfinger hin und her verschiebbar sind, sind geradlinig, wobei immer nur ein Greiferfinger translatorisch hin- und herbeweglich ist und fester Teil einer geradlinigen, mit Zahnstange versehenen Stange ist, die über das Ritzel linear verschoben wird. Der andere Greiferfinger dagegen ist am erstgenannten schwenkbeweglich und über dessen Linearverschiebung mit verschieblich.

In anderem Zusammenhang, nämlich bei einem Sortierstern für Flaschen-Sortieranlagen, sind bogenförmige Finger mit bogenförmiger Schließbewegung als sogenannte Sperrfinger bekannt, die zusätzliche Bestandteile einer Flaschenaufnahme sind und die Aufgabe haben, durch bogenförmiges Ausfahren eine innerhalb der Flaschenaufnahme aufgenommene Flasche rückseitig gegen Herausfallen zu sichern, indem durch die herausgefahrenen bogenförmigen Finger die Flaschenaufnahme rückseitig der darin lagernden Flasche etwas geschlossen wird.

Bekannte Greifvorrichtungen eingangs genannter Art haben den Nachteil, daß die Greiferfinger bei der Schwenkbewegung von der Freigabestellung in die Greifstellung und zurück einen recht großen, einem zu greifenden Rotationsgegenstand benachbarten Radialbereich durchlaufen. Für einen störungsfreien Bewegungsablauf muß auch in diesem radialen Nachbarbereich des zu greifenden Gegenstandes ausreichend freier Platz vorhanden sein. Ist dies nicht der Fall, besteht dort eine Kollisionsgefahr. Mithin erfordern bekannte Greifvorrichtungen große benachbarte Freiräume. Sie versagen dort, wo enge Platzverhältnisse herrschen und solche Freiräume nicht zur Verfügung stehen. Außerdem bedingt der Bewegungsablauf das Durchlaufen relativ großer Wege. Dadurch ergeben sich recht hohe Leerzeiten. Der Greifvorgang und gegebenenfalls ein sich anschließender Wechselvorgang gestalten sich dadurch relativ langsam, auf jeden Fall nicht so schnell wie es wünschenswert wäre. Außerdem sind die bekannten Greifvorrichtungen voluminös, schwer, kompliziert im Aufbau und in ihrer Funktion und aufwendig und teuer. Besonders dann, wenn sie zum Greifen relativ großer und schwerer Gegenstände dienen sollen, müssen sie entsprechend kräftig und biegesteif ausgebildet sein. Da ferner sichergestellt sein muß, daß in der Greifstellung beide Greiferfinger den gefaßten Gegenstand auch zuverlässig halten, müssen in der Greifstellung beachtliche Haltekräfte aufgebracht werden, um das Herausfallen zu verhindern. Besonders dann, wenn in der Greifstellung die Greifvorrichtung mit recht hoher Geschwindigkeit von einer Stelle zur anderen bewegt wird, was z.B. bei Werkzeugwechseleinrichtungen für numerisch gesteuerte Werkzeugmaschinen der Fall ist, und demnach auf den gegriffenen Gegenstand große Zentrifugalkräfte einwirken, müssen die Haltekräfte besonders groß sein. Dies bedingt entsprechend kräftige, voluminöse und schwere sowie teuere Antriebseinrichtungen für die Greiferfinger.

Der Erfindung liegt die Aufgabe zugrunde, eine Greifvorrichtung der im Oberbegriff des Anspruchs 1 genannten Art so auszubilden, daß sie klein baut, ein geringes Gewicht hat, recht einfach und unkompliziert aufgebaut ist und arbeitet und dazu kostengünstig ist und im übrigen auch keine aufwendigen, schweren und teueren Stellantriebe zur Betätigung der Greiferfinger, insbesondere zur Sicherstellung der Greifstellung, benötigt, und daß die Greifvorrichtung für die Bewegung von der Freigabestellung in die Greifstellung und zurück wenig benachbarten Freiraum um den zu greifenden Gegenstand herum benötigt und dabei nur kleine Wege zu durchlaufen hat, so daß sich für diese Wechselbewegung zwischen Freigabestellung und Greifstellung nur kurze Leerzeiten ergeben.

Diese Aufgabe ist bei einer Greifvorrichtung der im Oberbegriff des Anspruchs 1 definierten Art erfindungsgemäß durch die Merkmale im Kennzeichnungsteil des Anspruchs 1 gelöst.

Durch die Erfindung werden im einzelnen folgende Vorteile erreicht. Für den Bewegungsablauf von der Freigabestellung in die Greifstellung und zurück sind nur kleine Freiräume in der Nachbarschaft des zu greifenden Gegenstandes nötig. Die Greifvorrichtung kann daher auch bei sehr eng nebeneinander befindlichen Gegenständen mit geringen Zwischenräumen noch arbeiten. Dies ist vor allem dann von Vorteil, wenn rotationssymmetrische Teile, wie sie z.B. bei Werkzeugadaptern für automatische Werkzeugwechseleinrichtungen vorliegen, möglichst an zwei diametral gegenüberliegenden Umfangsbereichen gefaßt werden sollen, was bisher nur durch maulartiges Auf- und Zuschwenken der Greiferfinger verwirklicht werden konnte. Bei der erfindungsgemäßen Greifvorrichtung dagegen wird dieses Umgreifen an zwei einander diametral gegenüberliegenden Umfangsbereichen und so, daß eine auch bei großen wirkenden Lösekräften verliersichere Umfassung gegeben ist, durch die Bewegung der Greiferfinger entlang der bogenförmigen Führungsbahnen erreicht. Bei der von den Greiferfingern durchlaufenen Greifbewegung, die zum einen eine zur Symmetrieachse etwa parallele und zum anderen eine dazu etwa rechtwinklige Komponente hat, bewirkt letztere das radiale Einwärtswandern in Richtung auf den zu fassenden Gegenstand.

Vorteilhaft ist ferner,daß durch die Bewegung entlang den Führungsbahnen von letzteren zugleich in der Greifstellung entsprechende Reaktionskräfte aufgenommen werden können, die bei schweren gegriffenen Gegenständen und/oder großen darauf einwirkenden Zentrifugalkräften von den Greiferfingern herrühren, die dadurch in Öffnungsrichtung beansprucht werden. Je größer z.B. die wirkenden Zentrifugalkräfte sind, umso größer ist die radial von innen, vom gefaßten Gegenstand her, nach außen auf die Greifenden in Öffnungsrichtung einwirkende Kraft. Die dadurch sich ergebende Belastung wird von der jeweiligen Führungsbahn aufgenommen, die einem selbsttätigen Zurückweichen jedes Greiferfingers in die Freigabestellung erhöhten Widerstand entgegensetzt. Je größer mithin die Gewichte und sonstigen, in Öffnungsrichtung auf die Greifenden einwirkenden Kräfte sind, umso größer sind die sich der selbsttätigen Öffnung widersetzenden Reaktionskräfte der Greifvorrichtung. Daher bedürfen die Greiferfinger keines aufwendigen Verschiebeantriebes, der in der Greifstellung auch die diese sichernden erhöhten Kräfte aufzubringen hat. Vielmehr kann der Verschiebeantrieb einfach durch einen translatorisch hin-und herbewegbaren Schieber realisiert werden. Ein weiterer wesentlicher Vorteil liegt darin, daß überhaupt und auch aus den letztgenannten Gründen die Greifvorrichtung sehr klein und leicht bauen kann, einfach im Aufbau und in der Wirkungsweise ist und nur geringe Kosten bedingt. Die kompakte, leichte Bauweise macht sich auch dann besonders vorteilhaft bemerkbar, wenn die Greifvorrichtung im Raum von der einen zur anderen Stelle, mitsam dem gegriffenen Gegenstand, bewegt werden soll. Dann sind die zu beschleunigenden und zu verzögernden Massen sehr klein.

Derartige Bewegungen erfordern daher wenig Kraft und Zeit. Die erfindungsgemäße Greifvorrichtung ist außerordentlich vielfältig einsetzbar, und zwar überall dort, wo Gegenstände zu greifen und erforderlichenfalls auch im Raum zu bewegen sind. Ein vorteilhaftes Einsatzgebiet liegt bei der Verwendung im Zusammenhang mit Werkzeugwechseleinrichtungen, z.B. solchen, die bei numerisch gesteuerten Bearbeitungseinheiten, beispielsweise Horizontal-Einheiten, verwendet werden. Hier geht es darum, im Spindelkopf mittels eines sie aufnehmenden Adapters eingesetzte Werkzeuge möglichst schnell und kollisionsfrei gegen solche zu wechseln, die aus einem der Bearbeitungseinheit zugeordneten Werkzeugmagazin entnommen werden. Bei diesem Einsatzgebiet haben die Adapter heute überwiegend einen einzigen ringförmigen Bund mit umlaufender, V-förmiger Ringnut, der zum Greifen und Wechseln gefaßt wird. Bei dieser Art von Adaptern bedarf es zum verliersicheren Erfassen des zu greifenden Gegenstandes beachtlicher Schließkräfte, um sicherzustellen, daß auch schwere Werkzeuge, die z.B. 20 kg und mehr wiegen können, verliersicher gefaßt und auch bei den beim Wechsel recht hohen Zentrifugalkräften noch verliersicher gehalten werden. Diesen Anforderungen entspricht die erfindungsgemäße Greifvorrichtung außerordentlich gut. Da es hierbei auch besonders auf Kollisionsfreiheit ankommt, ist auch diesbezüglich die Greifvorrichtung besonders vorteilhaft. Auch die übrigen, schon geschilderten Vorteile kommen hier voll zur Geltung.

Es versteht sich, daß die bogenförmigen Führungsbahnen im einen Fall sowohl am Greiferfinger als auch am oder im Gehäuse angeordnet sein können oder aber im anderen Fall entweder am oder im Gehäuse angeordnet sind, wobei entsprechende Führungsglieder, z.B. Stege, Stifte, Rollen, Nocken od. dgl., dann am zugeordneten Greiferfinger sitzen und entlang der gehäuseseitigen Führungsbahn laufen. Statt dessen können die Verhältnisse auch kinematisch umgekehrt sein, derart, daß die Führungsbahn am Greiferfinger angeordnet ist und die an der Führungsbahn abgestutzten Führungsglieder am oder im Gehäuse sitzen, wobei diese dann ortsfest plaziert sind und die Führungsbahn bei bewegtem Greiferfinger relativ dazu bewegt wird. Durch die symmetrische Anordnung ergibt sich ein symmetrischer Greifvorgang. In Abhängigkeit von der Form und Größe des zu fassenden Gegenstandes kann statt dessen auch eine unsymmetrische Gestaltung vorteilhaft sein.

Eine vorteilhafte Ausführungsform ergibt sich aus Anspruch 2. Dabei versteht es sich, daß auch weitere Bogenformen ähnlicher geometrischer Form im Rahmen der Erfindung liegen, wenn nur sichergestellt ist, daß beim Ausschieben und Zurückschieben jedes Greiferfingers die Bewegung eine Linearkomponente mit dieser überlagerter, quer dazu gerichteter Komponente hat.

Weitere vorteilhafte Ausführungsformen ergeben sich aus den Ansprüchen 3 - 6 sowie aus Anspruch 7. Die daraus ersichtliche Ausbildung des Verschiebeantriebes ist besonders einfach und billig. Ein solcher ist im übrigen sehr leicht einer Steuerung zugänglich. Weitere vorteilhafte Ausführungsformen ergeben sich aus den Ansprüchen 8 und 9. Die Nut einschließlich der eingreifenden Nocken braucht in der Greifstellung praktisch keinerlei Kräfte aufzunehmen, die die Greiferfinger gegen eine selbsttätige Öffnung der Greifstellung abstützen, bedingt durch Gewichts- und Zentrifugalkräfte. Diese in Öffnungsrichtung des Maules gerichteten Kräfte führen im Bereich der Führungsnuten jedes Greiferfingers zu verstärkten Kippmomenten, die dort die Haftreibung zwischen Greiferfinger und Führungsbahnen als Funktion der genannten Kräfte erhöhen und dadurch die Greiferfinger gegen selbstätiges Zurückbewegen in die Freigabestellung in Abhängigkeit von der Lösekraft selbsttätig blockieren.

Zum Angriff an rotationssymmetrischen Gegenständen ist eine Ausbildung gemäß Anspruch 10 vorteilhaft. In vorteilhafter Weise sind die gefaßten Gegenstände in der Greifstellung auch in Achsrichtung formschlüssig zwischen den Greifenden gefaßt, wenn die Anordnung gemäß Anspruch 11 getroffen ist.

Vorteilhafte weitere Ausgestaltungen ergeben sich aus Anspruch 12. Die prismatische Form jeder Greiffläche macht es möglich, Gegenstände mit zumindest in einem gewissen Bereich variierenden Durchmessern mit ein und demselben Greiferpaar fassen zu können. Eine geradlinig ausgebildete Greiffläche macht das Fassen von entsprechend geradlinigen oder ebenen Teilen möglich, z.B. Würfeln, Blöcken od. dgl..

Eine gewisse selbsttätige Anpassung an den zu greifenden Gegenstand ermöglicht eine vorteilhafte Weiterbildung gemäß Anspruch 13. Die Ausgestaltung nach Anspruch 14 hat den Vorteil, daß die schwenkbeweglichen Greifbacken nicht oder nur geringfügig über die Greifenden überstehen.

Weitere, besonders vorteilhafte erfindungsgemäße Lösungen enthalten die Ansprüche 15 - 21. Hierbei kommen die eingangs erläuterten Vorteile der erfindungsgemäßen Greifvorrichtung ersichtlich zur Auswirkung. In der zurückgezogenen Freigabestellung stehen die Greiferfinger nicht in die Kollisionsbereiche hinein vor, die hier einerseits durch die sich drehende Spindel im Vertikalschlitten und andererseits durch das z.B. bewegte Werkzeugmagazin vorgegeben sind. Die von der Freigabestellung zur Greifstellung und zurück zu durchlaufenden Wege sind sehr klein.

Dementsprechend sind die dafür nötigen Zeiten außerordentlich kurz, was sich verkürzend auf die Wechselzeiten auswirkt. Die Greifvorrichtung bedarf außerdem einer nur kleinen Antriebsleistung, die in besonders einfacher, platzsparender und billiger Bauweise vom Stellglied erbracht wird. Bedingt durch die winklige Ausrichtung zwischen Schieber einerseits und Stellglied andererseits ist der Schieber z.B. in der Greifstellung selbsttätig gegenüber dem Stellglied abgestützt, so daß der Schieber als die Greiferfinger in der Greifstellung sichernder Stützanschlag wirken könnte, wenn die Greiferfinger selbst nicht im Bereich der Führungsbahnen bereits durch eigene Hemmung in dieser Greifstellung gesichert sind. Vorteilhaft wirkt sich hier auch die kompakte und leichte, kleine Ausführung der Greifvorrichtung aus, so daß bei den sehr schnellen 180°-Schwenkbewegungen, die der Doppelgreifer beim Wechsel zu vollführen hat, mitsamt jeweils darin gehaltener Gegenstände, soweit es um die Greifvorrichtung geht, nur sehr kleine zu beschleunigende und zu verzögernde Massen vorhanden sind. Auch dies ermöglicht eine Steigerung der Wechselzeiten. Vorteilhaft kommt auch zur Wirkung, daß die Greifvorrichtung noch dort verwendet werden kann, wo ringsum den zu greifenden Gegenstand sehr kleine Freiräume für die Bewegung der Greiferfinger von der Freigabestellung in die Greifstellung zur Verfügung stehen.

Die Führungsbahnen, Führungsnuten und mit diesen zusammenwirkenden, bei der Bewegung der Greiferfinger relativ dazu bewegten Führungsmittel können vielfältiger, grundsätzlich für sich bekannter Art sein. Dabei versteht es sich auch, daß eine Anpassung an unterschiedliche Größen und Formen zu greifender Gegenstände, zumindest in Grenzen, im Bereich der Greifvorrichtung dadurch ermöglicht wird, daß darin z.B. angeordnete Führungsbahnen, insbesondere Führungsnuten, in besonderen Trägern enthalten sind, die ihrerseits im Gehäuse verstellbar sind.

So können die Führungsnuten z.B. in entsprechend geformten Nutleisten enthalten sein, die jeweils am den Greifenden gegenüberliegenden Ende schwenkbeweglich im Gehäuse gelagert sind und in der jeweiligen Schwenkstellung gegenüber dem Gehäuse fixierbar sind, z.B. mittels Schrauben, Indexierstiften od. dgl. Es ist ersichtlich, daß durch Schwenken dieser Nutleisten sich die dadurch vorgegebene Bogenbahn, z.B. bezogen auf eine gehäuseseitige Symmtrieachse, verändert und damit die dem so geführten Greiferfinger erteilte Bewegungsrichtung.

Weitere Einzelheiten und Vorteile ergeben sich aus der nachfolgenden Beschreibung:

Der vollständige Wortlaut der Ansprüche ist vorstehend allein zur Vermeidung unnötiger Wiederholungen nicht wiedergegeben, sondern statt dessen lediglich durch Nennung der Anspruchsnummer darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in den Zeichnungen gezeigten Ausführungsbeispielen näher erläutert. Es zeigen:

Fig. 1 eine schematische Seitenansicht einer Greifvorrichtung mit im Schnitt gezeigtem, zu greifendem Gegenstand, wobei sich die Greifvorrichtung in ihrer eingezogenen Freigabestellung befindet, gemäß einem ersten Ausführungsbeispiel,

Fig. 2 eine schematische Seitenansicht entsprechend derjenigen in Fig. 1, bei der sich die Greifvorrichtung jedoch in der ausgeschobenen Greifstellung befindet,

Fig. 3 und 4 jeweils einen schematischen Schnitt entlang der Linie III-III bzw. IV-IV in Fig. 1,

Fig. 5 einen schematischen Schnitt entlang der Linie V-V in Fig. 2,

Fig. 6 und 7 jeweils eine schematische Seitenansicht allein der beiden Greiferfinger einer Greifvorrichtung gemäß einem zweiten bzw. dritten Ausführungsbeispiel,

Fig. 8 einen schematischen Schnitt des Greifendes eines Greiferfingers einer Greifvorrichtung gemäß einem vierten Ausführungsbeispiel,

Fig. 9 eine schematische Seitenansicht mit teilweisem horizontalen Schnitt einer automatischen Werkzeugwechseleinrichtung mit beidseitigen Greifvorrichtungen einer Horizontal-Bearbeitungseinheit, wobei sich beide Greifvorrichtungen in der ausgefahrenen Greifstellung befinden.

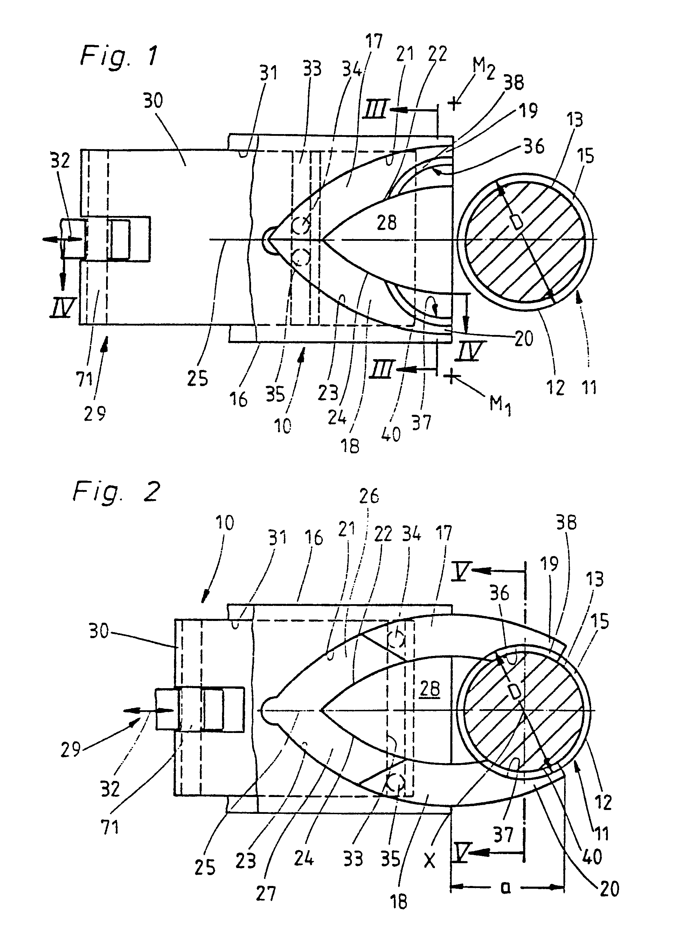

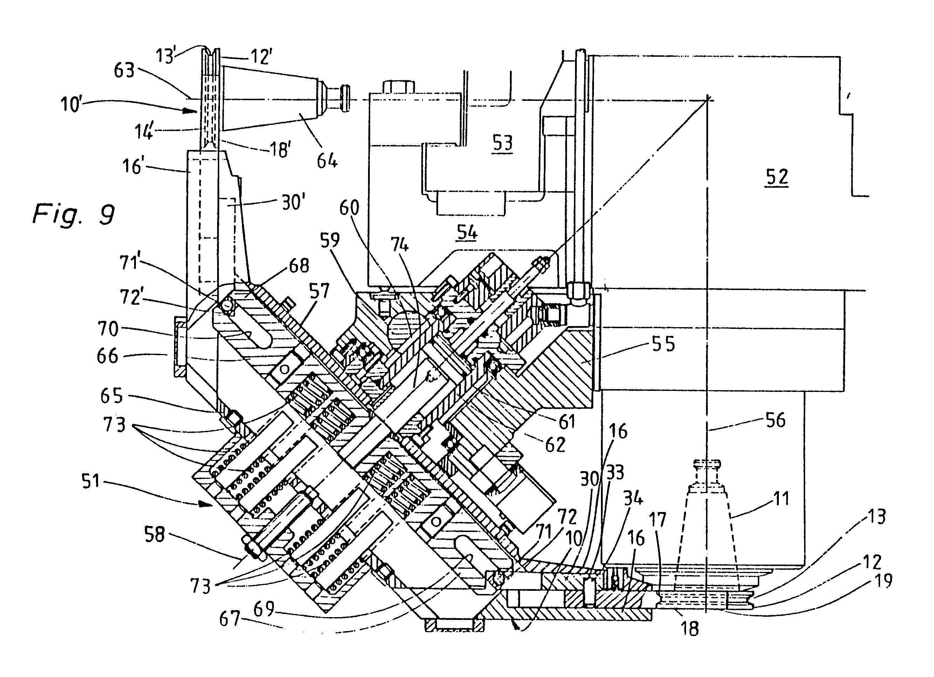

In Fig. 1 - 5 ist ein erstes Ausführungsbeispiel einer Greifvorrichtung 10 gezeigt, die überall dort zum Einsatz kommen kann, wo irgendwelche zu greifenden Gegenstände 11 nahezu beliebiger Form und Größe zu greifen und/oder wegzutransportieren sind. Die Greifvorrichtung 10 eignet sich also für Manipulatoren praktisch beliebiger Art, insbesondere für Industrieroboter, ferner mit besonderem Vorteil auch für automatische Werkzeugwechseleinrichtungen (Fig. 9). Zur Vereinfachung hat der Gegenstand 11 beim ersten Ausführungsbeispiel einen rotationssymmetrischen Teil 12, insbesondere Kreisring, mit dem Durchmesser D, wobei der Kreisring 12 eine im querschnitt etwa V-förmige Ringnut 13 mit zwei keilförmig zueinander gerichteten Seitenflanken 14, 15 aufweist. In dieser Weise sind z.B. heute übliche Werkzeugadapter ausgebildet, die jeweils Werkzeuge enthalten und im Zusammenhang mit einer automatischen Werkzeugwechseleinrichtung (Fig. 9) benutzt werden.

Die Greifvorrichtung 10 weist ein Gehäuse 16 auf, in dem zwei Greiferfinger 17 und 18 enthalten sind, die in der Greifstellung (Fig. 2) den zugreifenden Gegenstand 11, und zwar dessen Kreisring 12, zwischen ihren maulartig zupackenden Greifenden 19 bzw. 20 aufnehmen und verliersicher halten.

Die Greiferfinger 17, 18 sind im Gehäuse 16 derart gehalten und geführt, daß sie in der Greifstellung (Fig. 2) mit ihren Greifenden 19, 20 aus dem Gehäuse 16 heraus vorstehen, und zwar mit dem Überstandsmaß a (Fig. 2), dagegen in ihrer unwirksamen, den Gegenstand 11, 12 freigebenden Freigabestellung (Fig. 1) zumindest im wesentlichen gänzlich und überstandsfrei im Gehäuse 16 aufgenommen sind. In dieser Freigabestellung ist also der Bereich zwischen dem in Fig. 1 rechten, freien Ende des Gehäuses 16 und dem Gegenstand 11 völlig frei. Es kann nichts mit der Greifvorrichtung 10 kollidieren. Diese ist in der Freigabestellung (Fig. 1) völlig kollisionsfrei. Sie kann weder selbst irgendwo anstoßen oder hängenbleiben, noch können im Nachbarbereich arbeitende Elemente mit etwa vorstehenden Greifenden kollidieren.

Beide Greiferfinger 17, 18 sind entlang zugeordneten Führungsbahnen 21, 22 bzw. 23, 24 des Gehäuses 18 translatorisch hin-und herbeweglich. Beide Führungsbahnen 21, 22 bzw. 23, 24 sind bogenförmig. Sie verlaufen entlang dem Bogenabschnitt einer Parabel, einer Ellipse oder eines Kreises. Beim Beispiel ist angenommen, daß diese Führungsbahnen 21 bis 24 Kreisbogenabschnitte sind, deren zugehörige Mittelpunkte M1 bzw. M2 in Fig. 1 eingezeichnet sind und hier z.B. außerhalb des Bereichs des Gehäuses 16 im benachbarten Raum liegen.

Jeder Greiferfinger 17, 18 ist entlang seiner zugeordneten bogenförmigen Führungsbahn 21, 22 bzw. 23, 24 derart geführt, daß dem Greiferfinger 17 bzw. 18 während der Verschiebung von der eingeschobenen Freigabestellung (Fig 1) in Richtung auf den zu greifenden Gegenstand 11, 12 und in die ausgefahrene Greifstellung (Fig. 2) eine geradlinige Bewegung in Richtung auf den Gegenstand 11, 12 erteilt wird, der fortwährend eine dazu quer und ebenfalls zum Gegenstand 11, 12 gerichtete Komponente überlagert ist.

Beide Greiferfinger 17, 18 und deren zugehörige, bogenförmige Führungsbahnen 21, 22 bzw. 23, 24 sind klappsymmetrisch zueinander angeordnet, wobei die Symmetrieachse 25 durch die Mittellinie des Gehäuses 16 gebildet sein kann. Der Kreisbogenabschnitt jeder Führungsbahn 21, 22 bzw. 23, 24 ist zumindest im wesentlichen durch einen Teil des Bogenabschnittes bestimmt, der von einer mit der Symmetrieachse 25 deckungsgleichen Sekante abgetrennt ist. Die Führungsbahnen 21, 22 bzw. 23, 24 sind jeweils durch die Flanken einer Führungsnut 26 bzw. 27 gebildet, in der jeder Greiferfinger 17 bzw. 18 verschiebbar aufgenommen ist. Die parallel zur Zeichenebene gemäß Fig. 1 und 2 verlaufenden Breitflächen der Greiferfinger 17 und 18 können an entsprechenden Flächen des Gehäuses 16 anliegen. Beide Führungsnuten 26, 27 sind zum in Fig. 1, 2 rechten Ende des Gehäuses 10 hin unterteilt durch einen gehäuseseitigen Zwickel 20, der die Führungsbahnen 22, 24 trägt.

In entsprechender Anpassung an die Bogenform jeder Führungsnut 26, 27 ist jeder zugeordnete Greiferfinger 17 bzw. 18 als Parabel-, Ellipsen- oder Kreissegment gebildet.

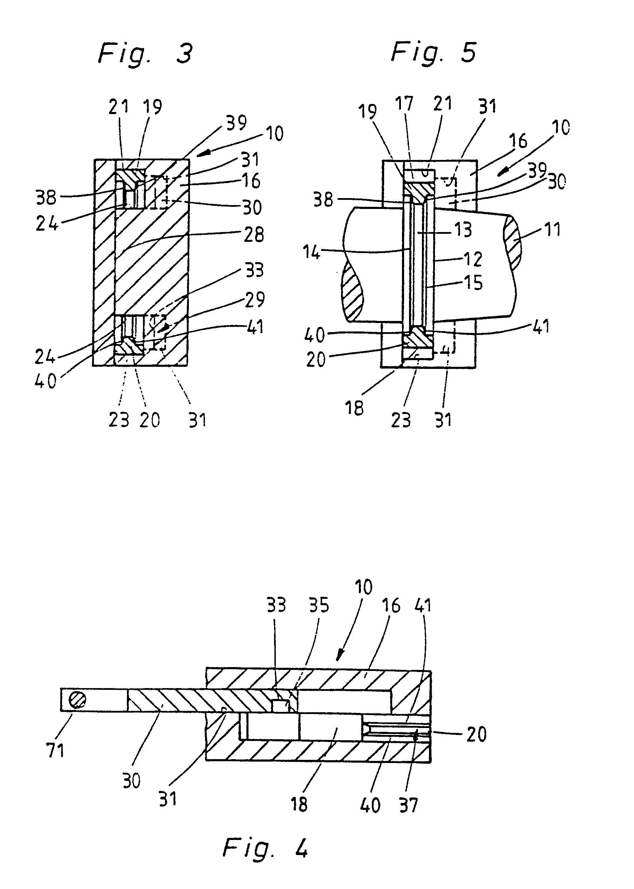

Die Greifvorrichtung 10 weist einen beiden Greiferfingern 17, 18 gemeinsamen Verschiebeantrieb 29 auf, der vorzugsweise einen im Gehäuse 16 hin und herbeweglich geführten Schieber 30 aufweist. Der Schieber 30 ist längs einer Geradführung 31 im Gehäuse 16 verschiebbar. Er befindet sich auf der in Fig. 3 und 5 rechten Seite der beiden Greiferfinger 17, 18. Die Bewegungsrichtung des Schiebers 30 ist durch Pfeil 32 in Fig. 1 und 2 angedeutet. Sie verläuft in Richtung oder parallel zu der Symmetrieachse 25. Mit dem Schieber 30 sind beide Greiferfinger 17, 18 jeweils über eine Kulissenführung gekuppelt, so, daß eine Translationsbewegung des Schiebers 30 in Richtung des Pfeiles 32 die entsprechende Verschiebung jedes Greiferfingers 17, 18 in seiner bogenförmigen Führungsnut 26 bzw. 27 bewirkt.

Als Teil der Kulissenführung weist der Schieber 30 eine quer zur Symmetrieachse 25 gerichtete Nut 33 auf, während an jedem Greiferfinger 17, 18 ein in die Nut 33 eingreifender Nocken 34, 35 sitzt, der in Richtung der Nut 33 darin verschiebbar geführt ist. Der Nocken 34, 35 besteht jeweils aus einem Stift, einer Rolle oder dgl.. Es versteht sich, daß die Verhältnisse auch kinematisch umgekehrt sein können.

Die Greifenden 19, 20 der Greiferfinger 17 bzw. 18 weisen auf ihrer Innenseite, die in der Greifstellung (Fig. 2) dem gegriffenen Gegenstand 11, 12 zugewandt ist, jeweils eine der Form und Abmessung des Gegenstandes 11, 12 angepaßte Greiffläche 36 bzw. 37 auf. Die Greiffläche hat, in der mit der Zeichenenebene gemäß Fig. 1 und 2 zusammenfallenden Verschiebeebene der Greiferfinger 17, 18 gesehen, die Form eines Kreisbogenabschnittes. Wesentlich ist dabei ferner, daß der Mittelpunkt X des von beiden Kreisbogenabschnitten in der Greifstellung (Fig. 2) bestimmten Kreises mit dem Durchmesser D sich innerhalb des Maulbereichs beider Greifenden 19, 20 befindet. In Fig. 2 liegt der Mittelpunkt X in etwa auf der Hälfte des Umspannungsbereichs beider Kreisbogenabschnitte der Greifenden 19, 20. Dadurch ist erreicht, daß der von den Greifflächen 36, 37 umfaßte Gegenstand 11, 12 an zwei einander diametral gegenüberliegenden Umfangsbereichen und so umgriffen wird, daß er nicht herausfallen kann. Wie Fig. 2 erkennen läßt, greift jeder Kreisbogenabschnitt der Greiffläche 36, 37 über den Scheitel des Kreisringes 12 nach rechts hinweg, so daß der Gegenstand 11 sich nicht nach rechts hin aus der formschlüssigen Umklammerung befreien kann. Gleiches ist auch in Fig. 2 nach links hin gegeben. Der Gegenstand 11 ist mithin in Richtung des Doppelpfeiles 32 formschlüssig und fest von den Greifenden 19, 20 umgriffen, und zwar auch so fest, daß bei Gegenständen 11 hohen Gewichtes, z.B. 20 kg und mehr, und auch bei hohen Zentrifugalkräften, die auf die Einheit wirken, ein Herauslösen des Gegenstandes 11 aus der umklammerten Greifstellung unmöglich ist.

Wie die Greifflächen 36, 37 im Querschnitt aussehen, zeigen Fig. 3 und 5. Jede Greiffläche 36, 37 weist zwei in Richtung zur Symmetrieachse 25 im Querschnitt keilförmig zulaufende Seitenflanken 38, 39 bzw. 40, 41 auf. Von diesen sind die Seitenflanken 38, 39 ebenso V-förmig zueinander gestellt, wie die anderen Seitenflanken 40, 41, wobei sie alle der im Querschnitt etwa V-förmigen Ringnut 13 entsprechen. Dadurch ist ein formschlüssiger Eingriff in die Ringnut 13 und ein formschlüssiger Halt in Richtung der Achse des Gegenstandes 11, d.h. rechtwinklig zur Zeichenebene gemäß Fig. 1 und 2, sichergestellt. Mithin ist der Gegenstand 11 in der Greifstellung gemäß Fig. 2 in allen Richtungen formschlüssig und verliersicher gefaßt.

Die Wirkungsweise der Greifvorrichtung 10 ist wie folgt. In der in Fig. 1 gezeigten Freigabestellung schließen die dort rechten freien Enden der völlig eingezogenen Greiferfinger 17, 18 mit der dortigen Kante des Gehäuses 16 z.B. bündig ab. Auf jeden Fall sind sie kollisionsfrei eingezogen. Der Schieber 30 ist in Pfeilrichtung 32 nach links in eine Extremstellung verschoben. Der Greiferfinger 17 ist im Gegenuhrzeigersinn soweit wie möglich in seine Führungsnut 26 hineingeschoben. Wenn auch in Fig. 2 gezeigt ist, daß in dieser Freigabestellung beide Greiferfinger 17, 18 mit ihren Enden gegeneinanderstoßen, ist dies keineswegs zwingend. Dadurch kann die Freigabestellung durch formschlüssigen Anschlag fixiert sein. Statt dessen kann die Fixierung auch durch Anschlag für den Schieber 30 vorgegeben sein.

Soll die Greifvorrichtung 10 in die Greifstellung gebracht werden, so wird mittels des Verschiebeantriebes 25 der Schieber 30 in Pfeilrichtung 32 nach rechts verschoben. Durch die in die Nut 33 eingreifenden Nocken 34, 35 wirkt auf die Greiferfinger 17, 18 dadurch eine Kraft, die eine Verschiebung der Greiferfinger 17, 18 in der jeweiligen Führungsnut 26, 27 entlang der Bogenbahn bewirkt. Jeder Greiferfinger 17, 18 erfährt eine Zwangsbewegung, bei der die Greiferfinger 17, 18 in Fig. 2 nach rechts hin aus dem Gehäuse 16 und in Richtung auf den zu greifenden Gegenstand 11, 12 ausgefahren werden. Durch die Bogenbahn, vorgegeben durch die Führungsbahnen 21 bis 24, wird der Vorwärtsbewegung der Greiferfinger 17, 18 zugleich eine Radialbewegung in Richtung auf den Mittelpunkt X des Gegenstandes 11, 12 überlagert. In der in Fig. 2 gezeigten Endstellung, die z.B. durch Anschlag des Schiebers 30 an einer inneren Fläche des Zwickels 28 definiert sein kann, greifen die Greifenden 19, 20 mit ihren Greifflächen 36, 37 in zuvor schon beschriebener Weise formschlüssig in die Ringnut 13 des Kreisringes 12 des Gegenstandes 11 ein, der dadurch in beiden Richtungen des Pfeiles 32 sowie in beiden Richtungen der Längsmittelachse des Gegenstandes 11 formschlüssig und verliersicher gefaßt ist. Soll der Gegenstand 11 wegtransportiert werden, bedarf es dazu lediglich einer entsprechenden Bewegung der Greifvorrichtung.

Die Greifvorrichtung 10 ist außerordentlich einfach und daher kostengünstig. Sie ist betriebssicher und gewährleistet eine verliersichere formschlüssige Umfassung des Gegenstandes 11 in der Greifstellung. Auch bei sehr schweren Gegenständen 11 und bei großen Fliehkräften, die bei schnellem Abtransport durch Bewegung der Greifvorrichtung 10 in ihrer Greifstellung herrschen, ist der Gegenstand 11 zuverlässig gefaßt, ohne daß die Gefahr besteht, daß er möglicherweise herausrutscht und durch die Gegend schlägt. Soll der Gegenstand 11 wieder freigegeben werden, wird der Schieber 30 mittels des Verschiebeantriebes 29 in Pfeilrichtung 32 nach links verschoben, wodurch gegensinnig zum zuvor erläuterten Vorgang die Greiferfinger 17, 18 in das Gehäuse 16 hineingezogen werden. Dabei heben die Greifflächen 36, 37 in Radialrichtung nach außen vom Kreisring 12 ab, mit überlagerter Bewegungskomponente etwa parallel zur Symmetrieachse 25. Dabei ist ausgeschlossen, daß die Greifenden 19, 20 etwa am zuvor gefaßten Gegenstand 11 noch hängen bleiben. Vielmehr lösen sich diese störungsfrei ab. Sind die Greiferfinger 17, 18 wieder ganz in das Gehäuse 16 eingefahren, wie Fig. 1 zeigt, hat die Greifvorrichtung 11 ihre Freigabestellung eingenommen. Der Freigabevorgang ist beendet. Zwischen dem zuvor gefaßten Gegenstand 11 und der Greifvorrichtung 10 ist nun freier Platz. Die Greifvorrichtung steht nicht im Wege. Sie ist völlig kollisionsfrei, so daß die Greifvorrichtung 10 und/oder der Gegenstand 11 in der Freigabestellung relativ zueinander bewegt werden können, ohne daß die Gefahr eines Anstoßens oder Kollidierens besteht.

Es versteht sich, daß bei einem anderen, nicht gezeigten Ausführungsbeispiel die Greiferfinger 17, 18 nicht selbst innerhalb der zugeordneten Führungsbahnen 21 bis 24 laufen, sondern an den Greiferfingern 17, 18 entsprechende Führungsglieder, z.B. Nocken, Stifte, Rollen od. dgl. angeordnet sind, die ihrerseits in entsprechenden bogenförmigen Führungsnuten, wie die Führungsnuten 26, 27, laufen und geführt sind. Auch andere kinematisch gleichwertige Varianten liegen im Rahmen der Erfindung.

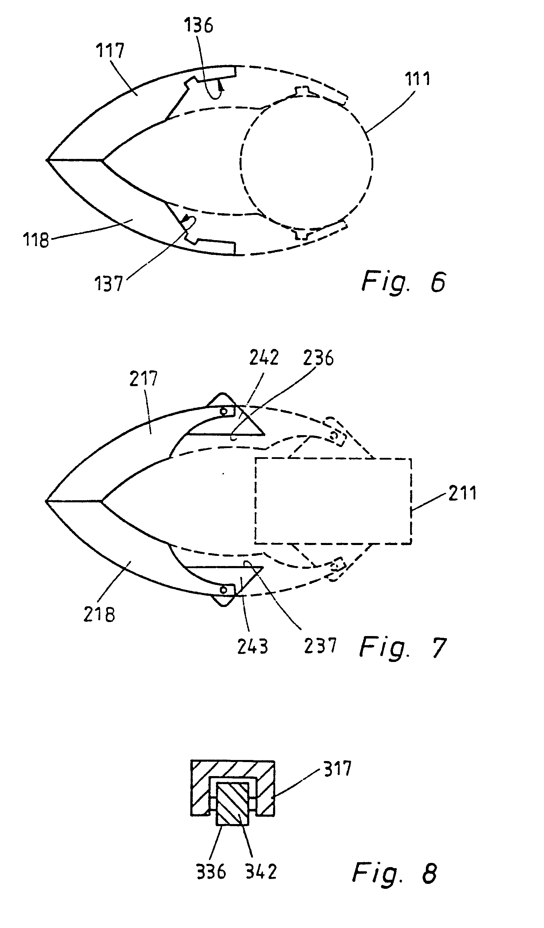

Bei dem in Fig. 6 gezeigten zweiten Ausführungsbeispiel sind für die Teile, die dem ersten Ausführungsbeispiel entsprechen, um 100 größere Bezugszeichen verwendet, so daß dadurch zur Vermeidung von Wiederholungen auf das erste Ausführungsbeispiel gemäß Fig. 1 - 5 verwiesen ist.

Das zweite Ausführungsbeispiel in Fig. 6 unterscheidet sich vom ersten dadurch, daß die Greiffläche 136, 137, in der Verschiebeebene der Greiferfinger 117 bzw. 118 gesehen, zumindest schwach V-förmig, d.h. prismatisch, ausgebildet ist. In Fig. 6 ist gestrichelt die Greifstellung gezeigt. Durch diese Ausbildung der Greifflächen 136, 137 eignen sich beide Greiferfinger 117, 118 zur Aufnahme von Gegenständen 111 unterschiedlich großer Durchmesser $D$, die zumindest in einem größeren Bereich variieren können. Aufgrund der prismatischen Ausbildung erfolgt eine entsprechende selbsttätige Anpassung beim Ergreifen solcher Gegenstände 111.

Beim dritten Ausführungsbeispiel in Fig. 7 sind aus den genannten Gründen um 200 größere Bezugszeichen verwendet. Bei diesem Ausführungsbeispiel weisen die Greiferfinger 217, 218 jeweils eine geradlinige Greiffläche 236 bzw. 237 auf. Letztere kann am Greifende der Greiferfinger 217, 218 in gleicher Weise wie beim ersten und zweiten Ausführungsbeispiel unmittelbar und einstückig vorgesehen sein oder sie ist, wie Fig. 7 zeigt, an einem besonderen Greifbacken 242 bzw. 243 vorgesehen, der schwenkbeweglich am Ende des zugeordneten Greiferfingers 217 bzw. 218 gehalten ist. Durch diese schwenkbewegliche Anordnung besonderer Greifbacken 242, 243 kann sich das Greiferfingerpaar 217, 218 an variierende Formen und Raumlagen zu fassender Gegenstände 211 selbsttätig, zumindest in Grenzen, anpassen. Dabei versteht es sich, daß die Anordnung schwenkbeweglicher Greifbacken 242, 243 nicht etwa darauf beschränkt ist, daß die Greifflächen 236, 237 geradlinig sind. Mit besonderem Vorteil können die Greifflächen bei solchen schwenkbeweglichen Greifbacken 242, 243 auch bogenförmig oder prismatisch gestaltet sein.

Das vierte Ausführungsbeispiel gemäß Fig. 8 verdeutlicht, daß im Falle schwenkbeweglich angeordneter Greifbacken 342 diese auch innerhalb des Greiferfingers 317 am Greifende enthalten sein können, so daß sie mit der Greiffläche 336 praktisch überhaupt nicht oder zumindest nur geringfügig in Maulrichtung überstehen.

Fig. 9 zeigt eine automatische Werkzeugwechseleinrichtung 51 einer Horizontal-Bearbeitungseinheit 52, wobei die Werkzeugwechseleinrichtung 51 in Klappsymmetrischer Anordnung zwei völlig gleiche Greifvorrichtungen 10 bzw. 10' trägt, wie sie insbesondere anhand des ersten Ausführungsbeispieles gemäß Fig. 1 - 5 beschrieben sind.

Am vertikalen Ständer 53 der Bearbeitungseinheit 52 ist ein Vertikalschlitten 54 vertikal in Y-Richtung verschiebbar. Am Vertikalschlitten 54 ist ein Greiferhalter 55 parallel zur Spindelachse 56 vor und zurück verschiebbar gehalten. Am Greiferhalter 55 ist ein Doppelgreifer 57 um eine zur Spindelachse 56 unter 45° verlaufende Schwenkachse 58 um 180 vor und zurück schwenkbar gehalten. Die Schwenkbetätigung erfolgt mittels eines rechtwinklig zur Zeichenebene auf und ab verschiebbaren Kolbens 59 eines Hydraulikzylinders, dessen daran feste Zahnstange 60 mit einem Zahnrad 61 am Drehteil 62 in Eingriff steht.

Der Doppelgreifer 57 weist an jedem Ende in zueinander um die Schwenkachse 58 klappsymmetrischer Anordnung ein Gehäuse 16 bzw. 16' mit einem darin gehaltenen Greiferfingerpaar 17, 18 bzw. 17', 18' auf, deren Verschiebeebene zumindest im wesentlichen rechtwinklig zur Spindelachse 56 bzw. zur Mittelachse 63 eines in einem nicht weiter gezeigten Werkzeugmagazin befindlichen, ein Werkzeug enthaltenden Adapters 64 ausgerichtet ist. Der Adapter 64 ist genauso ausgebildet wie der ebensolche Gegenstand 11 im Bereich der Spindelachse 56. Beide weisen im Durchmesser identische Kreisringe 12, 12' mit Ringnut 13, 13' auf.

Der Doppelgreifer 57 weist innerhalb seines Gehäuses 65 ein Stellglied 66 auf, das in Richtung der Schwenkachse 58 vor- und zurückbewegbar und dabei rechtwinklig zur Schwenkachse 58 ausgerichtet ist und verbleibt. Das Stellglied 66 ist an jedem Ende über eine Kulissenführung mit dem diesem Ende zugeordneten Schieber 30 bzw. 30' gekoppelt, der zur Betätigung des zugeordneten Greiferfingerpaares dient. Das Stellglied 66 weist an beiden Enden eine dort offene Gabel 67, 68 mit Nut 69, 70 zwischen beiden Gabelschenkeln auf. In der Nut 69, 70 ist ein am Schieber 30 bzw. 30' sitzender Mitnehmer 71 bzw. 71' verschiebbar aufgenommen. Der Mitnehmer 71, 71' kann, wie auch Fig. 1, 2 und 4 zeigen, aus einem bloßen Stift bestehen, der einen endseitig im Schieber 30, 30' enthaltenen Schlitz quer durchsetzt. Der Mitnehmer kann auch als nicht gezeigte Rolle oder als am Schieber 30, 30' schwenkbar gehaltener Kulissenstein 72, 72' ausgebildet sein, der beim gezeigten Ausführungsbeispiel gemäß Fig. 9 z.B. auf dem Mitnehmer 71, 71' sitzt und passend zur Nut 69, 70 in dieser gleitverschieblich ist. Das Stellglied 66 und der jedem Ende zugeordnete Schieber 30, 30' schließen miteinander auf der Seite, die zum Vertikalschlitten 54 zeigt, einen Winkel von jeweils 135° ein. Das Stellglied 66 ist mittels mehreren Rückstellfedern 73 in Richtung seiner in Fig. 9 gezeigten zurückgefahrenen Stellung beaufschlagt, in der jeder endseitige Schieber 30 bzw. 30' in seiner ausgefahrenen Stellung (Fig. 2) gehalten ist, in der das zugeordnete Greifenfingerpaar 17, 18 bzw. 17', 18' sich in der ausgefahrenen Greifstellung befindet, wie anhand von Fig. 2 eingehend schon erläutert ist. In dieser Greifstellung erfaßt die Greifvorrichtung 10 im Bereich der Spindelachse 56 den dortigen Gegenstand 11, während die andere Greifvorrichtung 10' im Bereich des nicht gezeigten Werkzeugmagazins den dortigen Adapter 64 verliersicher faßt.

Am Stellglied 66 greift gegensinnig zur Wirkungsrichtung der Rückstellfedern 73 ein insbesondere hydraulischer Arbeitszylinder mit seinem Kolben 74 koaxial zur Schwenkachse 58 an. Bei Einschalten des Arbeitszylinders wird der Kolben 74 ausgefahren, der damit das Stellglied 66 gegen die Wirkung der Rückstellfedern 73 koaxial zur Schwenkachse 58 vorschiebt mit einhergehendem Zurückzug jedes endseitig angekoppelten Schiebers 30 bzw. 30' in dessen zurückgezogene Stellung (Fig. 1), in der das zugeordnete Greiferfingsrpaar 17, 18 bzw. 17', 18' sich in der eingefahrenen Freigabestellung befindet, wie anhand Fig. 1 eingehend erläutert wurde. Bei Ausfall des Arbeitsdruckes für den Arbeitszylinder wird das Stellglied 66 über die sich entspannenden Rückstellfedern 73 selbsttätig in die in Fig. 9 gezeigte rückgeschobene Stellung bewegt, in der sich beide Greifvorrichtungen 10 bzw. 10' in der gezeigten Greifstellung befinden.

Zum automatischen Werkzeugwechsel, wird, ausgehend von dieser Arbeitsstellung gemäß Fig. 9, wie folgt vorgegangen. Nach Lösen entsprechender Mechanismen im nicht gezeigten Werkzeugmagazin sowie spindelseitig wird der Greiferhalter 55 in Richtung parallel zur Spindelachse 56 vorgefahren. Dabei wird der Gegenstand 11 aus dem Spindelkopf herausgezogen. Zugleich wird, in zur Spindelachse 56 paralleler Richtung, aus dem nicht gezeigten Magazin der Adapter 64 mit darin enthaltenem Werkzeug herausgezogen. Hiernach erfolgt über eine Hubbewegung des Kolbens 59 die Schwenkung des Doppelgreifers 57 um 180°. Dann befindet sich der Adapter 64 vor dem Spindelkopf, während der Gegenstand 11 sich magazinseitig dort befindet, wo zuvor der Adapter 64 war. Hiernach wird der Greiferhalter 55 parallel zur Spindelachse 56 wieder zurück in die gezeigte Stellung verfahren. Hierbei wird der Adapter 64 in den Spindelkopf eingesteckt. Magazinseitig wird der Gegenstand 11 in den frei gewordenen Magazinplatz eingesteckt. Hiernach wird der Arbeitszylinder für den Kolben 74 beaufschlagt, der den Kolben 74 gegen die Rückstellfedern 73 vorschiebt. Über die in den Nuten 69, 70 befindlichen Kulissensteine 72, 72' werden dabei die Schieber 30, 30' in Richtung zur Schwenkachse 58 verschoben, d.h., betrachtet in Fig. 1, in Pfeilrichtung 32 nach links gezogen. Die davon gesteuerten Greiferpaare 17, 18 bzw. 17', 18' werden in die völlig eingezogene Freigabestellung bewegt, in der sie den jeweiligen Kreisring 12 bzw. 12' des zuvor gefaßten Gegenstandes 11 bzw. Adapters 64 freigeben. In dieser Stellung kann das Stellglied 66 verbleiben. Es ist für einen neuen Werkzeugwechsel in Position. Soll dieser erfolgen, wird der Arbeitszylinder für den Kolben 74 so angesteuert, daß dieser zurückfährt und das Stellglied 66 dadurch und durch die sich entspannenden Rückstellfedern 73 wieder in die in Fig. 9 gezeigte Lage zurückfällt, in der die Greiferfingerpaare jeder Greifvorrichtung 10 bzw. 10' wieder in ihre Greifstellung gelangen.

Der Einsatz der Greifvorrichtung 10, 10' insbesondere für eine derartige Werkzeugwechseleinrichtung 51 gemäß Fig. 9 hat hier, zusätzlich zu den schon beschriebenen Vorteilen, den besonderen Vorzug, daß im Greifbereich des Doppelgreifers 57 in der Freigabestellung keinerlei Kollisionselemente vorstehen. Der eine Kollisionsbereich der sich drehenden Spindel im Bereich des Vertikalschlittens 54 ist völlig frei von irgendwelchen von der Greifvorrichtung überstehenden Teilen. Gleiches ist im Bereich des Magazine der Fall. In der Freigabestellung ist also die Werkzeugwechseleinrichtung 51 völlig kollisionsfrei. Die Gefahr irgend eines Anschlages oder diejenige, daß an vorstehenden Teilen sich bildende Späne hängenbleiben und dadurch Störungen oder Beschädigungen auftreten, ist völlig gebannt. Vorteilhaft ist außerdem, daß die Greifvorrichtung nur kleine Wege zu durchlaufen hat, um von der Freigabestellung in die Greifstellung und zurück zu gelangen. Dies wirkt sich günstig auf noch kleinere Wechselzeiten beim Werkzeugwechsel aus. Beim mittels des Kolbens 59 bewirkten Schwenk des Doppelgreifers 57 um die Schwenkachse 58 um 180° wirken große Zentrifugalkräfte, insbesondere bei schweren Werkzeugen, die bis zu 20 kg und schwerer sein können. Um die Wechselzeiten klein zu halten, treten bei dieser Schwenkbewegung große Beschleunigungs- und Verzögerungskräfte auf. Auch bei diesen extremen Beanspruchungen und Zentrifugalkräften, die darauf hinwirken, die greiferseitig gefaßten Gegenstände herauszuschleudern, ist dem zuverlässig entgegengewirkt. Die in der Greifstellung zwischen den Greiferfingern gefaßten Gegenstände sind auch bei solchen extremen Belastungen zuverlässig festgehalten.

Der besondere Vorzug der erfindungsgemäßen Greifvorrichtung 10, 10' wird insbesondere im Zusammenhang mit dem einen gezeigten Anwendungsfall gemäß Fig. 9 deutlich. Wie man sieht, erfolgt bei der Bewegung der Greiferfinger 17, 18 von der Freigabestellung (Fig. 1) in die Greifstellung (Fig. 2) und zurück keine nennenswerte Radialbewegung, bezogen auf den Mittelpunkt X des zu greifenden Gegenstandes 11. Die Greifenden 19, 20 gelangen bei der überlagerten Längs- und Querbewegung, die sie bei der Verschiebung entlang der Bogenbahn in der Führungsnut 26, 27 machen, in Radialrichtung gesehen nicht über das Maß des Gehäuses 16 hinaus. Anders etwa als bei zangenähnlichen Greifbacken, die um einen beide Backen verbindenden Gelenkpunkt radial in Richtung auf den zu greifenden Gegenstand eingeschwenkt bzw. in umgekehrter Richtung aufgeschwenkt werden und demgemäß in Redialrichtung viel Platz benötigen, zeichnet sich die erfindungsgemäße Greifvorrichtung 10, 10' dadurch aus, daß in dieser Richtung praktisch kein zusätzlicher freier Raum notwendig ist.

Die Greifvorrichtung 10, 10' kann also mit allen geschilderten Vorteilen selbst dort eingesetzt werden, wo nur wenig freier Platz im Nachbarbereich der einander diametral gegenüberliegenden Angriffsbereiche des Gegenstandes vorhanden ist. Betrachtet man das Beispiel des Werkzeugmagazine in Fig. 9, so kann der darin in Wechselposition befindliche Adapter 64 auch dann noch störungsfrei gegriffen und beim vollzogenen Wechsel das gewechselte Werkzeug in Form des Gegenstandes 11 störungsfrei wieder eingesetzt werden, wenn in Radialrichtung des Kreisringes 12, 12' nur sehr geringe Freiräume bis hin zu irgendeinem benachbarten Teil vorhanden sind. Dies ist mit der Grund, weswegen die erfindungsgemäße Greifvorrichtung 10, 10' völlige Kollisionsfreiheit bietet.

### Patentansprüche

1. Greifvorrichtung, insbesondere für Manipulatoren, Werkzeugwechseleinrichtungen od. dgl., die ein Gehäuse (16) mit zwei Greiferfingern (17, 18) aufweist, die in der Greifstellung den zu greifenden Gegenstand (11) zwischen ihren maulartig offenen Greifenden (19, 20) aufnehmen und halten, wobei die Greiferfinger (17, 18) im Gehäuse (16) entlang zugeordneten Führungsbahnen des Gehäuses (16) translatorisch hin- und herbeweglich derart gehalten und geführt sind, daß sie in der Greifstellung mit ihren Greifenden (19, 20) aus dem Gehäuse (16) heraus vorstehen, dagegen in ihrer unwirksamen, den zu greifenden Gegenstand (11) freigebenden Freigabestellung zumindest im wesentlichen gänzlich und überstandsfrei im Gehäuse (16) aufgenommen sind, dadurch gekennzeichnet , daß beide Greiferfinger (17, 18; 117, 118; 217, 218; 317; 17', 18') mittels einer bogenförmigen Führungsbahn (21 bis 24) und dieser folgenden Führungsgliedern entlang einer solchen Bogenbahn geführt sind, die eine geradlinige, in Richtung zum zu greifenden Gegenstand (11; 111; 64) weisende Komponente und eine quer zu dieser und in Richtung zum zu greifenden Gegenstand (11; 111; 64) verlaufende Komponente aufweist, derart, daß jedem Greiferfinger (17, 18; 117, 118; 217, 218; 317; 17', 18') während seiner Verschiebung von der eingeschobenen Freigabestellung (Fig. 1) in Richtung auf den zu greifenden Gegenstand (11, 111; 64) und in die ausgefahrene Greifstellung (Fig.2) eine geradlinige Bewegung in Richtung auf den Gegenstand (11; 111; 64) erteilt wird, der eine dazu quer und ebenfalls zum Gegenstand gerichtete Komponente überlagert ist, daß die beiden Greiferfinger (17, 18; 117, 118; 217, 218; 317; 17', 18') und die bogenförmigen Führungsbahnen (21 bis 24) symmetrisch zur Greiferachse angeordnet sind und daß die Greifenden (19, 20) der Greiferfinger (17, 18; 117, 118; 217, 218; 317) auf ihrer Innenseite, die in der Greifstellung (Fig. 2) dem gegriffenen Gegenstand (11; 111; 211) zugewandt ist, jeweils eine Greiffläche (36, 37; 136, 137; 236, 237; 336) aufweisen, die einen den Gegenstand (11; 111; 211) vor dessen Diametralebene erfassenden Abschnitt und einen diesen hinter dessen Diametralebene erfassenden Abschnitt aufweist.

2. Greifvorrichtung nach Anspruch 1, dadurch gekennzeichnet, daß die bogenförmige Führungsbahn (21 bis 24) entlang dem Bogenabschnitt einer Parabel, einer Ellipse oder eines Kreises verläuft, dessen Mittelpunkt (M1, M2) vorzugsweise außerhalb des Gehäusebereiches im benachbarten Raum liegt.

3. Greifvorrichtung nach Anspruch 2, dadurch gekennzeichnet, daß der Kreisbogenabschnitt jeder Führungsbahn (21 bis 24) zumindest im wesentlichen durch einen Teil des Bogenabschnittes bestimmt ist, der von einer mit der Symmetrieachse (25) deckungsgleichen Sekante abgetrennt ist.

4. Greifvorrichtung nach einem der Ansprüche 1 - 3, dadurch gekennzeichnet, daß die jeweilige, einem Greiferfinger (17, 18; 117, 118; 217, 218; 317; 17′, 18′) zugeordnete Führungsbahn (21, 22 bzw. 23, 24) aus einer Führungsnut (26 bzw. 27) gebildet ist, längs der, vorzugsweise in der, der Greiferfinger (17, 18; 117, 118; 217, 218; 317; 17′, 18′) verschiebbar geführt ist.

5. Greifvorrichtung nach einem der Ansprüche 1 - 4, dadurch gekennzeichnet, daß jeder Greiferfinger (17, 18; 117, 118; 217, 218; 317; 17′, 18′) eine der Bogenform seiner Führungsnut (26 bzw. 27) entsprechende Bogenform aufweist, insbesondere aus einem Parabel-, Ellipsen- oder Kreissegment gebildet ist.

6. Greifvorrichtung nach einem der Ansprüche 1 - 5, gekennzeichnet durch einen beiden Greiferfingern (17, 18) gemeinsamen Verschiebeantrieb (29), vorzugsweise mit einem im Gehäuse (16; 16′) hin- und herbeweglich geführten Schieber (30; 30′).

7. Greifvorrichtung nach Anspruch 6, dadurch gekennzeichnet, daß der Schieber (30) längs einer Geradführung (31) im Gehäuse (16) verschiebbar ist, die zumindest im wesentlichen parallel zur Symmetrieachse (25) verläuft.

8. Greifvorrichtung nach Anspruch 6 oder 7, dadurch gekennzeichnet, daß die beiden Greiferfinger (17, 18) jeweils über eine Kulissenführung (33 bis 35) mit dem Schieber (30) gekuppelt sind.

9. Greifvorrichtung nach Anspruch 8, dadurch gekennzeichnet, daß die Kulissenführung am einen Teil, insbesondere am Schieber (30), eine quer zur Symmetrieachse (25) gerichtete Nut (33) und am anderen Teil, insbesondere am jeden Greiferfinger (17, 18), einen in die Nut (33) eingreifenden und darin in Nutrichtung verschiebbar geführten Nocken (34, 35), z.B. einen Stift oder eine Rolle, aufweist.

10. Greifvorrichtung nach einem der Ansprüche 1 - 9, dadurch gekennzeichnet, daß die Greiffläche (36, 37), in der Verschiebeebene der Greiferfinger (17, 18) gesehen, die Form eines Kreisbogenabschnittes aufweist, wobei der Mittelpunkt (X) des von beiden Kreisbogenabschnitten in der Greifstellung (Fig.

2) bestimmten Kreises (Durchmesser D) sich innerhalb des Maulbereiches beider Greifenden befindet, derart, daß ein Gegenstand (11), insbesondere ein rotationssymmetrischer Teil (12), z.B. Kreisring, des Gegenstandes (11), an zwei einander diametral gegenüberliegenden Umfangsbereichen verliersicher umgreifbar ist.

11. Greifvorrichtung nach Anspruch 10, dadurch gekennzeichnet, daß die Greiffläche (36, 37) jeweils zwei in Richtung zur Symmetrieachse (25) im Querschnitt keilförmig zulaufende Seitenflanken (38, 39 bzw. 40, 41) aufweist, die den Seitenflanken (14, 15) einer im Querschnitt etwa V-förmigen Ringnut (13) des rotationssymmetrischen Teiles (12), z.B. Kreisringes, des Gegenstandes (11) entsprechend ausgebildet sind.

12. Greifvorrichtung nach einem der Ansprüche 1 - 9. dadurch gekennzeichnet , daß die Greiffläche (136, 137; 236, 237; 336), in der Verschiebeebene der Greiferfinger (117, 118; 217, 218; 317) gesehen, zumindest schwach V-förmig bzw. prismatisch (Fig. 6) oder geradlinig (Fig. 7, 8) ausgebildet ist.

13. Greifvorrichtung nach einem der Ansprüche 1 - 12, dadurch gekennzeichnet, daß am Greifende jedes Greiferfingers (217, 218; 317) ein Greifbacken (242, 243; 342) schwenkbeweglich gehalten ist, der seinerseits die Greiffläche (236, 237; 336) trägt.

14. Greifvorrichtung nach Anspruch 13, dadurch gekennzeichnet, daß der Greifbacken (342) innerhalb des Greiferfingers (317) am Greifende enthalten ist.

15. Greifvorrichtung nach einem der Ansprüche 1 - 14, insbesondere für automatische Werkzeugwechseleinrichtungen (51) von Bearbeitungszentren (52), gekennzeichnet durch einen am Vertikalschlitten (54) gehaltenen, parallel zur Spindelachse (56) vor und zurück verschiebbaren Greiferhalter (55), an dem ein Doppelgreifer (57) um eine zur Spindelachse (56) unter 45° verlaufende Schwenkachse (58) um 180˙ schwenkbar gehalten ist, der an jedem Ende in zueinander um die Schwenkachse (58) klappsymmetrischer Anordnung ein Gehäuse (16, 16′) mit zwei darin gehaltenen Greiferfingern (17, 18 bzw. 17′, 18′) aufweist, deren Verschiebeebene im wesentlichen rechtwinklig zur Spindelachse (56) bzw. einer dazu rechtwinklig stehenden Achse ausgerichtet ist.

16. Greifvorrichtung nach Anspruch 15, dadurch gekennzeichnet, daß der Doppelgreifer (57) innerhalb seines Gehäuses (65) ein in Richtung der Schwenkachse (58) vor- und zurückbewegbares, etwa rechtwinklig zur Schwenkachse ausgerichtetes Stellglied (66) aufweist, das an jedem Ende über eine Kulissenführung (67, 69, 71, 72 bzw. 68, 70, 71′, 72′) mit dem diesem Ende zugeordneten, ein Greiferfingerpaar (17, 18 bzw. 17′, 18′) betätigenden Schieber (30 bzw. 30′) gekoppelt ist.

17. Greifvorrichtung nach Anspruch 16 , dadurch gekennzeichnet, daß das Stellglied (66) an beiden Enden jeweils eine - dort vorzugsweise offene- Gabel (67 bzw. 68) aufweist, in der ein am Schieber (30 bzw. 30') sitzender Mitnehmer (71 bzw. 71') verschiebbar aufgenommen ist.

18. Greifvorrichtung nach Anspruch 17, dadurch gekennzeichnet, daß der Mitnehmer (71, 71') als Stift ausgebildet ist.

19. Greifvorrichtung nach Anspruch 17 oder 18, dadurch gekennzeichnet, daß der Mitnehmer (71, 71') als Rolle oder schwenkbar am Schieber (30 bzw. 30') gehaltener Kulissenstein (72, 72') ausgebildet ist.

20. Greifvorrichtung nach einem der Ansprüche 18 oder 19, dadurch gekennzeichnet, daß das Stellglied (66) und der jedem Ende zugeordnete Schieber (30, 30') einen Winkel jeweils von im wesentlichen 135° einschließen.

21. Greifvorrichtung nach einem der Ansprüche 16 - 20, dadurch gekennzeichnet, daß das Stellglied (66) mittels Rückstellfedern (73) in Richtung seiner zurückgefahrenen Stellung beaufschlagt ist, in der jeder endseitige Schieber (30, 30') in seiner ausgefahrenen Stellung (Fig. 2) gehalten ist, in der das zugeordnete Greiferfingerpaar (17, 18 bzw. 17', 18') sich in der ausgefahrenen Greifstellung (Fig. 2, 9) befindet, und daß am Stellglied (66) gegensinnig zur Wirkungsrichtung der Rückstellfedern (73) ein insbesondere hydraulischer Arbeitszylinder mit seinem Kolben (74) angreift, mittels dessen das Stellglied (66) in Richtung der Schwenkachse (58) vorschiebbar ist mit einhergehendem Zurückzug jedes endseitigen Schiebers (30, 30') in dessen zurückgezogene Stellung (Fig. 1), in der das zugeorndete Greiferfingerpaar (17, 18 bzw. 17', 18') sich in der eingefahrenen Freigabestellung (Fig. 1) befindet.

**Claims**

1. Gripper, particularly for manipulators, tool changing devices or the like, comprising a housing (16) with two gripper fingers (17, 18) which, in the gripping position, pick up the object (11) which is to be gripped and hold it between their ends (19, 20) which are open like a jaw, the gripper fingers (17, 18) being supported and guided for reciprocating translatory movement along associated guideways in the housing (16), so that when they are in the gripping position, their gripper ends (19, 20) protrude from the housing (16) while in their inoperative position in which they release the object (11) which is to be gripped, they are at least substantially completely accommodated in the housing (16) with no outside projection, characterised in that both gripper fingers (17, 18; 117, 118; 217, 218; 317; 17', 18') are guided by means of an arcuate guideway (21 to 24) and guide members which follow the latter, along such a curved path which comprises a rectilinear component pointing in the direction of the object (11; 111; 64) which is to be gripped and a component extending transversely thereto and in the direction of the object (11; 111; 64) which is to be gripped, so that to every gripper finger (17, 18; 117, 118; 217, 218; 317; 17', 18') during its displacement from the pushed-in clearance position (Fig.1) in the direction of the object (11; 111; 64) which is to be gripped and into the extended gripper position (Fig. 2) a rectilinear movement in the direction of the object (11; 111; 64) on which there is superimposed a component directed transversely thereto and likewise toward the object, and in that the two gripper fingers (17, 18; 117, 118; 217, 218; 317; 17', 18') and the arcuate guideways (21 to 24) are disposed symmetrically of the gripper axis and in that the gripper ends (19, 20) of the gripper fingers (17, 18; 117, 118; 217, 218; 317) have on their inside face which, in the gripping position (Fig. 2), is towards the object (11; 111; 211) which is gripped, in each case a gripping surface (36, 37; 136, 137; 236, 237; 336), which has a portion to grip the object (11; 111; 211) before its diametral plane and a portion which grips it after the diametral plane.

2. Gripper according to Claim 1, characterised in that the arcuate guideway (21 to 24) extends along a portion of a curve of a parabola, an ellipse or of a circle, of which the middle point (M1, M2) preferably lies outside the area of the housing, in the adjacant space.

3. Gripper according to Claim 2, characterised in that the arc of each guideway (21 to 24) is at least substantially determined by a part of the arc which is separated by a secant coincident with the axis (25) of symmetry.

4. Gripper according to one of Claims 1 to 3, characterised in that whichever guideway (21, 22 or 23, 24) is associated with a gripper finger (17, 18; 117, 118; 217, 218; 317; 17', 18') is formed from a guide groove (26 or 27) along which and preferably in which the gripper finger (17, 18; 117, 118; 217, 218; 317; 17', 18') is displaceably guided.

5. Gripper according to one of Claims 1 to 4, characterised in that each gripper finger (17, 18; 117, 118; 217, 218; 317; 17', 18') has an arcuate form corresponding to the arcuate form of its guide groove (26 or 27) being in particular constituted by a segment of a parabola, an ellipse or a circle.

6. Gripper according to one of Claims 1 to 5, characterised by, common to both gripper fingers (17, 18), a displacement drive (29) preferably with a slider (30, 30') adapted for reciprocating movement in the housing (16, 16').

7. Gripper according to Claim 6, characterised in that the slider (30) is displaceable along a straight guide (31) in the housing (16), said guide extending at least substantially parallel with the axis of symmetry (25).

8. Gripper according to Claim 6 or 7, characterised in that the two gripper fingers (17, 18) are in each case coupled to the slider (30) through a connecting link guide (33 to 35).

9. Gripper according to Claim 8, characterised in that the connecting link guide has on one part, particularly on the slider (30), a groove (33) directed transversely of the axis of symmetry (25) and on the other part, particularly on each gripper finger (17, 18), a projection (34, 35), e.g. a pin or a roller, guided for displacement in the groove (33).

10. Gripper according to one of Claims 1 to 9, characterised in that the gripping face (36, 37) viewed in the plane of displacement of the gripper fingers (17, 18) has the form of an arc of a circle, the middle point (X) of the circle defined by the two arcs of the circle in the gripping position (Fig. 2) (diameter D) is situated within the jaw area of the two gripper ends so that an object (11), particularly a rotationally symmetrical part (12), e.g. a circular ring, of the object (11), can be gripped around two diametrically opposed portions of its periphery in such a way that it cannot be lost.

11. Gripper according to Claim 10, characterised in that the gripping surface (36, 37) has in each case converging in the direction of the axis of symmetry (25), two crosssectionally wedge-shaped side flanks (38, 39 or 40, 41) which are constructed to correspond to the lateral flanks (14, 15) of a cross-sectionally substantially V-shaped annular slot (13) in the rotationally symmetrical part (12), e.g. circular ring, of the object (11).

12. Gripper according to one of Claims 1 to 9, characterised in that the gripper surface (136, 137; 236, 237; 336), viewed in the plane of displacement of the gripper fingers (117, 118; 217, 218; 317), is constructed to be at least slightly V-shaped or psimatic (Fig. 6) or rectilinear (Figs. 7, 8).

13. Gripper according to one of Claims 1 to 12, characterised in that mounted for pivoting movement at the gripping end of each gripper finger (217, 218; 317) is a gripper jaw (242, 243; 342) which in turn carries the gripping surface (236, 237; 336).

14. Gripper according to Claim 13, characterised in that the gripper jaw (342) is contained within the gripper finger (317) at the gripping end.

15. Gripper according to one of Claims 1 to 14, particularly for automatic tool changing devices (51) of machining centres (52), characterised by a gripper holder (55) adapted for displacement forwards and back parallel with the spindle axis (56) and mounted on the vertical carriage (54), and having, mounted on it to pivot through 180° about an axis (58) extending at an angle of 45° to the spindle axis (56), a double gripper (57) having at each end arranged symmetrically of each other for movement about the pivoting axis (58), a housing (16, 16') containing two gripper fingers (17, 18 or 17', 18') of which the plane of displacement is orientated substantially at a right-angle to the spindle axis (56) or to an axis which is at a right-angle thereto.

16. Gripper according to Claim 15, characterised in that the double gripper (57) has within its housing (65) a positioning member (66) aligned substantially at a right-angle to the pivoting axis and adapted for reciprocating movement in the direction of the pivoting axis (58), the positioning member (66) being coupled at each end through a connecting link guide (67, 69, 71, 72 or 68, 70, 71', 72') to the slider (30 or 30') associated with that end and actuating a pair of gripper fingers (17, 18 or 17', 18').

17. Gripper according to Claim 16, characterised in that the positioning member (66) has at both ends in each case a preferably open fork (67, 68) in which there is displaceably accommodated an entraining means (71, 71') mounted on tthe slider (30 or 30').

18. Gripper according to Claim 17, characterised in that the entraining means (71, 71') is constructed as a pin.

19. Gripper according to Claim 17 or 18, characterised in that the entraining means (71, 71') is constructed as a roller or as a sliding block (72, 72') supported pivotally on the slider (30 or 30').

20. Gripper according to one of Claims 18 or 19, characterised in that the positioning member (66) and the slider (30, 30') associated with each end enclose between them an angle of substantially 135°.

21. Gripper according to one of Claims 16 to 20, characterised in that the positioning member (66) is biased by restoring springs (73) in the direction of its retracted position in which each end slider (30, 30') is held in its extended position (Fig. 2) in which the associated pair of gripper fingers (17, 18 or 17', 18') is in the extended gripping position (Figs. 2, 9) and in that the positioning member (66) is engaged in the opposite direction to the direction of action of the restoring springs (73) by an in particular hydraulic working cylinder via its piston (74), by means of which the positioning member (66) can be advanced in the direction of the pivoting axis (58) with a concomitant retraction of each end slider (30, 30') into its retracted position (Fig. 1) in which the associated pair of gripper fingers (17, 18 or 17', 18') are in the retracted clearance position (Fig. 1).

**Revendications**

1 - Dispositif de préhension, en particulier pour manipulateurs, appareils changeurs d'outils ou analogues, lequel comporte une enveloppe (16) avec deux doigts de préhension (17, 18) qui dans la position de préhension saisissent et maintiennent l'objet à saisir (11) entre leurs extrémités préhensiles (19, 20) ouvertes à la manière d'un bec, les doigts de préhension (17, 18) étant retenus et guidés de façon à pouvoir effectuer des mouvements de translation alternatifs dans l'enveloppe (16) le long de voies de guidage correspondantes de l'enveloppe (16) et ce, de telle manière que dans la position de préhension ils fassent saillie avec leurs extrémités préhensiles (19, 20) en dehors de l'enveloppe (16), alors que dans leur position de relâchement inactive libérant l'objet à saisir (11) ils sont reçus au moins sensiblement toutes entiers dans l'enveloppe (16) sans faire saillie, caractérisé en ce que les deux doigts de préhension (17, 18; 117, 118; 217, 218; 317; 17', 18') sont guidés, au moyen d'une voie de guidage en forme d'arc (21 à 24) et d'organes de guidage faisant suite à cette dernière, le long d'une voie en forme d'arc qui comporte une composante rectiligne orientée en direction de l'objet à saisir (11; 111; 64) et une composante s'etendant transversalement à cette dernière et en direction de l'objet à saisir (11; 111; 64), de telle manière qu'à chaque doigt de préhension (17, 18; 117, 118; 217, 218; 317; 17', 18'), lors de son coulissement à partir de la position de relâchement rentrée (figure 1) en direction de l'objet à saisir (11; 111; 64) et jusque dans la position de préhension sortie (figure 2) est communiqué un mouvement rectiligne en direction de l'objet (11; 111; 64), auquel mouvement est superposée une composante orientée transversalement à ce mouvement et également à l'objet, en ce que les deux doigts de préhension (17, 18; 117, 118; 217, 218; 317; 17', 18') et les voies de guidage en forme d'arc (21 à 24) sont disposés symétriquement par rapport à l'axe de préhension et en ce que les extrémités préhensiles (19, 20) des doigts de préhension (17, 18; 117, 118; 217, 218; 317) présentent sur leur côté intérieur, qui dans la position de préhension (figure 2) se trouve en regard de l'objet saisi (11; 111; 211), chacune une surface de préhension (36, 37; 136, 137; 236, 237; 336) qui comporte une partie saisissant l'objet (11; 111; 211) devant le plan diamétral de celui-ci et une partie saisissant l'objet derrière son plan diamétral.

2 - Dispositif de préhension selon la revendication 1, caractérisé en ce que la voie de guidage en forme d'arc (21 à 24) s'étend le long de la partie d'arc d'une parabole, d'une ellipse ou d'un cercle dont le centre (M1, M2) se trouve de préférence à l'extérieur de la région de l'enveloppe au voisinage de celle-ci.

3 - Dispositif de préhension selon la revendication 2, caractérisé en ce que la partie en forme d'arc de cercle de chaque voie de guidage (21 à 24) est déterminée au moins sensiblement par une portion de la partie en forme d'arc qui est séparée par une sécante coïncidant avec l'axe de symétrie (25).

4 - Dispositif de préhension selon l'une quelconque des revendications précédentes, caractérisé en ce que la voie de guidage (21, 22; 23, 24) associée respectivement à un doigt de préhension (17, 18; 117, 118; 217, 218; 317; 17', 18') est formée d'une rainure de guidage (26; 27) le long de laquelle, de préférence dans laquelle, est guidé de façon à pouvoir coulisser le doigt de préhension (17, 18; 117, 118; 217, 218; 317; 17', 18').

5 - Dispositif de préhension selon l'une quelconque des revendications précédentes, caractérisé en ce que chaque doigt de préhension (17, 18; 117, 118; 217, 218; 317; 17', 18') présente une forme d'arc correspondant à la forme d'arc de sa rainure de guidage (26; 27), et est constitué en particulier par un segment parabolique, elliptique ou circulaire.

6 - Dispositif de préhension selon l'une quelconque des revendications précédentes, caractérisé par un mécanisme de coulissement (29) commun aux deux doigts de préhension (17, 18) et muni de préférence d'un poussoir (30; 30') guidé dans l'enveloppe (16; 16') de façon à pouvoir effectuer un mouvement alternatif.

7 - Dispositif de préhension selon la revendication 6, caractérisé en ce que le poussoir (30) peut coulisser le long d'un guide rectiligne (31) dans l'enveloppe (16), lequel guide s'étend au moins sensiblement parallèlement à l'axe de symétrie (25).

8 - Dispositif de préhension selon la revendication 6 ou 7, caractérisé en ce que les deux doigts de préhension (17, 18) sont reliés chacun par l'intermédiaire d'un guide à coulisse (33 à 35) au poussoir (30).

9 - Dispositif de préhension selon la revendication 8, caractérisé en ce que le guide à coulisse présente dans l'une des pièces, en particulier dans le poussoir (30), une rainure (33) orientée transversalement à l'axe de symétrie (25) et sur l'autre pièce, en particulier sur chaque doigt de préhension (17, 18), une saillie (34, 35), par exemple une tige ou un galet, qui s'engage dans la rainure (33) et y est guidée de façon à pouvoir coulisser dans la direction de la rainure.

10 - Dispositif de préhension selon l'une quelconque des revendications précédentes, caractérisé en ce que la surface de préhension (36, 37), observée dans le plan de coulissement des doigts de préhension (17, 18), présente la forme d'une partie d'arc de cercle, le centre (X) du cercle (diamètre D) déterminé par les deux parties d'arc de cercle dans la position de préhension (figure 2) se trouvant à l'intérieur de la région du bec des deux extrémités préhensiles de telle manière qu'un objet (11), en particulier une pièce de révolution (12), par exemple une bague circulaire, de l'objet (11) puisse être saisie de manière imperdable au niveau de deux régions périphériques diamétralement opposées.

11 - Dispositif de préhension selon la revendication 10, caractérisé en ce que chacune des surfaces de préhension (36, 37) présente respectivement deux flancs latéraux (38, 39; 40, 41) qui convergent, en coupe transversale, en forme de coin en direction de l'axe de symétrie (25) et qui sont réalisés de façon à correspondre aux flancs latéraux (14, 15) d'une rainure annulaire (13), en coupe transversale sensiblement en forme de V, de la pièce de révolution (12), par exemple une bague circulaire, de l'objet (11).

12 - Dispositif de préhension selon l'une quelconque des revendications 1 à 8, caractérisé en ce que la surface de préhension (136, 137; 236, 237; 336), observée dans le plan de coulissement des doigts de préhension (117, 118; 217, 218; 317), est au moins légèrement en V, c'est-à-dire prismatique (figure 6), ou rectiligne (figures 7, 8).

13 - Dispositif de préhension selon l'une quelconque des revendications précédentes, caractérisé en ce qu'à l'extrémité préhensile de chaque doigt de préhension (217, 218; 317) est retenue de manière à pouvoir basculer une mâchoire (242, 243; 342) qui pour sa part porte la surface de préhension (236, 237; 336).

14 - Dispositif de préhension selon la revendication 13, caractérisé en ce que la mâchoire (342) est contenue à l'intérieur du doigt de préhension (317) à l'extrémité préhensile de celui-ci.

15 - Dispositif de préhension selon l'une quelconque des revendications précédentes, en particulier pour appareils changeurs d'outils automatiques (51) de centres d'usinage (52), caractérisé par un élément (55) porteur d'organe de préhension qui, retenu au niveau du chariot vertical (54), peut coulisser en avant et en arrière parallèlement à l'axe (56) de la broche et sur lequel est retenu, de manière à pouvoir basculer de 180° autour d'un axe de basculement (58) faisant un angle de 45° avec l'axe (56) de la broche, un organe de préhension double (57) qui présente à chaque extrémité une enveloppe (16, 16'), disposées symétriquement à la manière d'éléments se substituant l'un à l'autre par basculement autour de l'axe de basculement (58), avec deux doigts de préhension (17, 18; 17', 18') maintenus dans l'enveloppe et dont le plan de coulissement est orienté sensiblement à angle droit respectivement par rapport à l'axe (56) de la broche et à un axe perpendiculaire à ce dernier.

16 - Dispositif de préhension selon la revendication 15, caractérisé en ce que l'organe de préhension double (57) présente à l'intérieur de son enveloppe (65) un organe de manoeuvre (66) qui, orienté sensiblement à angle droit par rapport à l'axe de basculement et pouvant être amené à avancer et reculer dans la direction de l'axe de basculement (58), est relié au niveau de chaque extrémité, respectivement par l'intermédiaire d'un guide à coulisse (67, 68, 71, 72; 68, 70, 71', 72'), au poussoir (30; 30') associé à cette extrémité et actionnant une paire de doigts de préhension (17, 18; 17', 18').

17 - Dispositif de préhension selon la revendication 16, caractérisé en ce que l'organe de manoeuvre (66) présente au niveau de chacune de ses extrémités une fourche (67; 68) de préférence ouverte à ce niveau et dans laquelle est reçu respectivement, de manière à pouvoir coulisser, un entraîneur (71; 71') solidaire du poussoir (30; 30').

18 - Dispositif de préhension selon la revendication 17, caractérisé en ce que l'entraineur (71, 71') est réalisé sous forme de tige.

19 - Dispositif de préhension selon la revendication 17 ou 18, caractérisé en ce que l'entraîneur (71, 71') est réalisé soit sous forme de galet, soit en tant que coulisseau (72, 72') retenu sur le poussoir (30 ; 30') de manière à pouvoir pivoter.

20 - Dispositif de préhension selon la revendication 18 ou 19, caractérisé en ce que l'organe de manoeuvre (66) et le poussoir (30, 30') associé à chaque extrémité font entre eux respectivement un angle d'environ 135°.

21 - Dispositif de préhension selon l'une quelconque des revendications 16 à 20, caractérisé en ce que l'organe de manoeuvre (66) est sollicité, au moyen de ressorts de rappel (73), en direction de sa position reculée dans laquelle chaque poussoir terminal (30, 30') est retenu dans sa position sortie (figure 2), dans laquelle la paire de doigts de préhension respective (17, 18; 17', 18') se trouve dans la position de préhension sortie (figures 2, 9), et en ce que sur l'organe de manoeuvre (66) agit, en sens contraire du sens d'action des ressorts de rappel (73), un vérin notamment hydraulique avec son piston (74) au moyen duquel l'organe de manoeuvre (66) peut être avancé dans la direction de l'axe de basculement (58) avec retrait concomitant de chaque poussoir terminal (30, 30') dans sa position reculée (figure 1) où la paire de doigts de préhension correspondante (17, 18; 17', 18') se trouve dans la position de relâchement rentrée (figure 1).

Fig. 1

Fig. 2

## Fig. 3

## Fig. 5

## Fig. 4

Fig. 6

Fig. 7

Fig. 8

Fig. 9